# EUROPEAN PATENT APPLICATION

(11) **EP 4 691 222 A1**
(43) Date of publication of application: **11.02.2026**
(21) Application number: 25190687.1
(22) Date of filing: 21.07.2025
(51) Int. Cl.: A01G 7/02, A01G 9/24

(54) **CIRCULATION SYSTEM**

(30) Priority: 09.08.2024 JP 2024133913
(71) Applicant: Yazaki Energy System Corporation, Minato-ku, Tokyo (JP)
(72) Inventor: INAGAKI, Motomi, Hamamatsu-shi, Shizuoka, 4300822 (JP)
(74) Representative: Hoffmann Eitle

(57) **Abstract**

A circulation system includes a biomass generator for supplying electricity to a specific facility, a first air conditioner for performing air conditioning of the specific facility based on waste heat generated by use of the fuel in the biomass generator, a second air conditioner for performing air conditioning of an agricultural house that cultivates plants based on the waste heat generated by use of the fuel in the biomass generator, a first supply structure for supplying generated power by the biomass generator to at least one of equipment in the agricultural house and the second air conditioner, and a second supply structure for supplying carbon dioxide generated by use of the fuel in the biomass generator to the agricultural house. The agricultural house grows wood for obtaining the wood material available as the fuel in the biomass generator.

## Description

### TECHNICAL FIELD

The present disclosure relates to a circulation system.

### BACKGROUND ART

An energy-efficient air conditioning system has been proposed for cooling or heating a facility in recent years (for example, see Patent Literature 1). Such an air conditioning system focuses on improving energy efficiency. There has further been proposed a system that generates electricity for a facility by solar power generation (for example, see Patent Literature 2).

### CITATION LIST

### PATENT LITERATURE

Patent Literature 1: JP2022-114707A
Patent Literature 2: JP2018-161044A

### SUMMARY OF INVENTION

Here, the systems described in Patent Literatures 1, 2 intend to improve energy efficiency by control-based energy efficiency and use of natural energy. However, the inventor of the present disclosure has studied to improve energy efficiency from a completely different point of view, and found that the systems described in Patent Literatures 1, 2 are still insufficient in terms of energy efficiency.

The present disclosure is made to solve such a problem in the related art, and an object of the present disclosure is to provide a circulation system that can improve energy efficiency.

A circulation system of the present disclosure includes a biomass generator configured to perform biomass power generation by rotating a turbine using a wood material as fuel and supply electricity to a specific facility; a first air conditioner configured to perform air conditioning of the specific facility based on waste heat generated by use of the fuel in the biomass generator; a second air conditioner configured to perform air conditioning of an agricultural house that cultivates plants based on the waste heat generated by use of the fuel in the biomass generator; a first supply structure configured to supply generated power by the biomass generator to at least one of equipment in the agricultural house and the second air conditioner; and a second supply structure configured to supply carbon dioxide generated by use of the fuel in the biomass generator to the agricultural house. The agricultural house grows wood for obtaining the wood material available as the fuel in the biomass generator.

According to the present disclosure, it is possible to provide a circulation system that can improve energy efficiency.

### BRIEF DESCRIPTION OF DRAWINGS

FIG. 1 is a configuration diagram showing a circulation system according to an embodiment of the present disclosure; and
FIG. 2 is a configuration diagram showing an example of a carbon dioxide supply unit shown in FIG. 1.

### DESCRIPTION OF EMBODIMENTS

Hereinafter, the present disclosure will be described according to a preferred embodiment. The present disclosure is not limited to the embodiment described below, and the embodiment can be appropriately modified without departing from the scope of the present disclosure. In the embodiment described below, illustration and description of a part of configurations are omitted, and a publicly known or well-known technique is appropriately applied to details of an omitted technique within a range in which no contradiction occurs with contents described below.

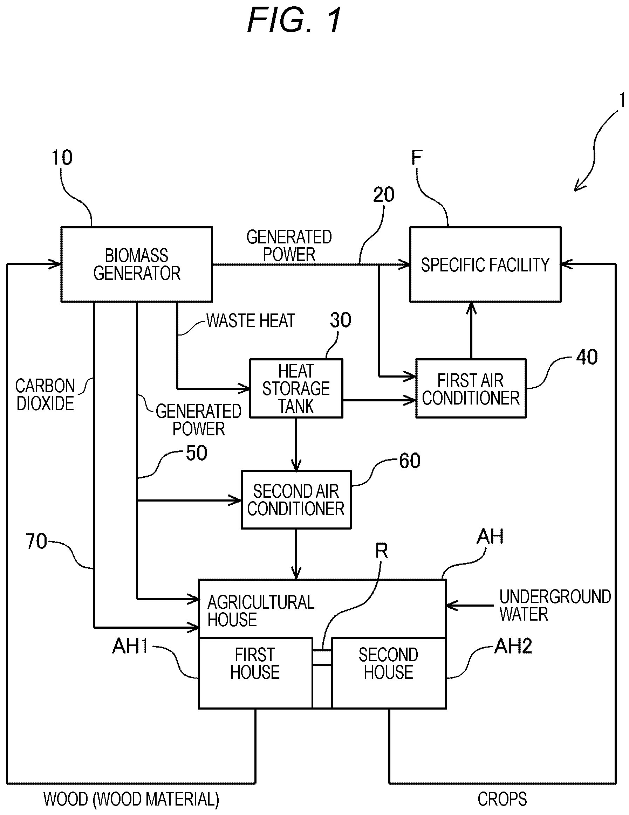

FIG. 1 is a configuration diagram showing a circulation system according to the embodiment of the present disclosure. A circulation system 1 shown in FIG. 1 includes a biomass generator 10, and provides generated power by the biomass generator 10 and an air conditioning environment using waste heat from the biomass generator 10 to a specific facility F such as a hotel. The circulation system 1 illustrated in FIG. 1 cultivates plants using the generated power by the biomass generator 10, the air conditioning environment using waste heat, and generated carbon dioxide. In particular, the circulation system 1 according to the present embodiment produces fuel for the biomass generator 10 by itself by growing wood, thereby improving energy efficiency.

The circulation system 1 includes a first power supply unit 20, a heat storage tank 30, and a first air conditioner 40 in addition to the biomass generator 10.

The biomass generator 10 generates power using a wood material as fuel. Examples of the wood material include wood pellets and wood chips. The wood material may be firewood. The biomass generator 10 according to the present embodiment generates power by burning the wood material and rotating a turbine (not shown). The wood material generates waste heat and carbon dioxide during combustion.

The first power supply unit 20 is a component including a power line that supplies generated power by the biomass generator 10 to the specific facility F. The generated power of the biomass generator 10 is supplied to the specific facility F through the first power supply unit 20, and is used for equipment such as lighting equipment and cooking apparatus in the specific facility F. The first power supply unit 20 preferably includes a storage battery for the specific facility F, stores power in the storage battery, and supplies power to the specific facility F. The first power supply unit 20 supplies operating power for the first air conditioner 40.

The heat storage tank 30 stores waste heat generated by use of fuel in the biomass generator 10. For example, the heat storage tank 30 stores heat by heating, with waste heat, a heat medium such as water. The heat storage tank 30 is not limited to one that stores heat in water, and may be one that stores heat in another heat medium fluid or one that stores heat in a heat storage material such as heat storage ceramic.

The first air conditioner 40 is a device for adjusting the air conditioning environment in the specific facility F, and is implemented by, for example, an absorption chiller-heater that performs cooling and heating using heat in the heat storage tank 30. The first air conditioner 40 is not limited thereto, and may be implemented by an absorption refrigerator that performs only cooling, a radiation panel that introduces cold and hot water to heat or cool a room, a combination thereof, and the like.

As described above, since the circulation system 1 according to the present embodiment includes the biomass generator 10, the first power supply unit 20, the heat storage tank 30, and the first air conditioner 40, it is possible to generate electricity for the specific facility F such as a hotel and adjust the air conditioning environment.

The circulation system 1 according to the present embodiment further includes an agricultural house AH, a second power supply unit (first supply structure) 50, a second air conditioner 60, and a carbon dioxide supply unit (second supply structure) 70.

The agricultural house AH is a facility for cultivating plants, and may be a simple cultivation facility such as a vinyl house, and a closed cultivation facility that has a roof and lighting equipment and cultivates plants using lighting of the lighting equipment.

In particular, in the present embodiment, the agricultural house AH grows wood for obtaining a wood material available as fuel in the biomass generator 10. The agricultural house AH preferably includes a first house AH1 that grows the wood and a second house AH2 that cultivates crops. The wood grown in the first house AH1 is not particularly limited, and examples thereof include cedar, pine, and cypress. The wood grown in the first house AH1 is preferably a so-called elite tree. The elite tree is a superior specimen selected from seedlings produced by crossbreeding particularly outstanding plus trees. The first house AH1 grows the wood until a seedling suitable for planting, and may also grow the wood beyond the seedling stage. The crops cultivated in the second house AH2 are not particularly limited, and examples thereof include strawberries, eggplants, cucumbers, and cherry tomatoes.

The second power supply unit 50 is a component including a power line that supplies generated power by the biomass generator 10 to the agricultural house AH. The generated power of the biomass generator 10 is supplied to the agricultural house AH through the second power supply unit 50, and is used for equipment such as lighting equipment and water spraying apparatus in the agricultural house AH. The second power supply unit 50 may include a storage battery for the agricultural house AH, store power in the storage battery, and supply power to the agricultural house AH. The second power supply unit 50 supplies operating power for the second air conditioner 60.

The second air conditioner 60 is a device for adjusting an air conditioning environment in the agricultural house AH, and is implemented by, for example, an absorption chiller-heater that performs cooling and heating using heat in the heat storage tank 30. The second air conditioner 60 is not limited thereto, and may be implemented by an absorption refrigerator that performs only cooling, a radiation panel that introduces cold and hot water to heat or cool a room, a combination thereof, and the like.

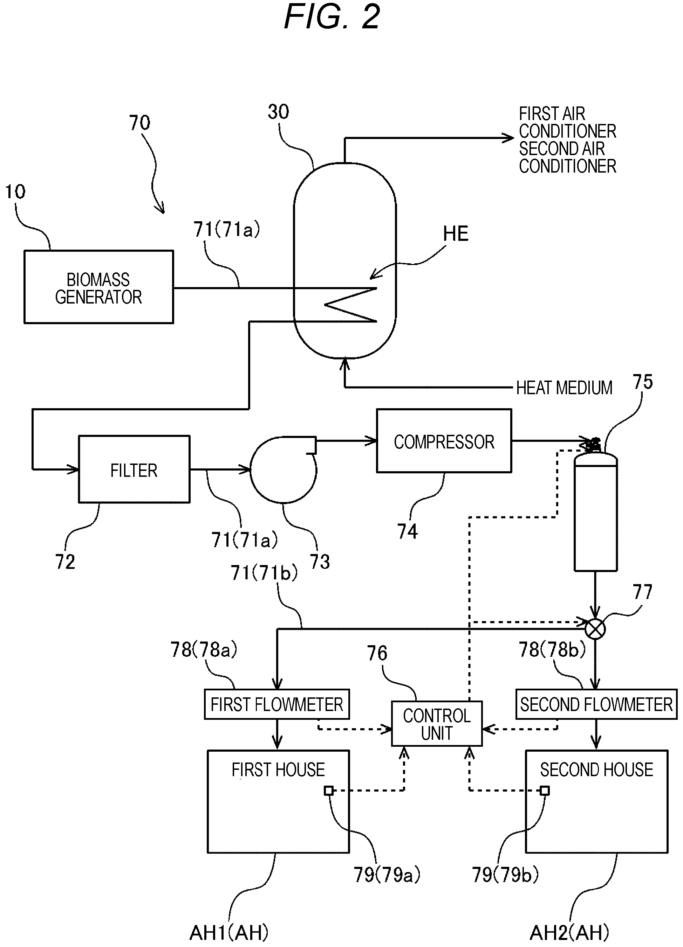

The carbon dioxide supply unit 70 supplies carbon dioxide generated by use of fuel in the biomass generator 10 to the agricultural house AH. The carbon dioxide supply unit 70 preferably includes a tank 75 (see FIG. 2) or the like to be described later.

The circulation system 1 includes the second power supply unit 50, the second air conditioner 60, the carbon dioxide supply unit 70, and the agricultural house AH in addition to the biomass generator 10, the first power supply unit 20, the heat storage tank 30, and the first air conditioner 40. For this reason, the circulation system 1 can provide the generated power of the biomass generator 10, the air conditioning environment using the waste heat, and carbon dioxide to the agricultural house AH. In particular, since the agricultural house AH grows wood for obtaining at least the wood material as the fuel of the biomass generator 10, the agricultural house AH produces the fuel by itself, so that energy efficiency can be improved. More specifically, since at least carbon dioxide is not necessary for the specific facility F, energy efficiency can be improved by using carbon dioxide for growing wood in the agricultural house AH. Further, when a power demand or an air conditioning demand is low in the specific facility F or when there is no room for storage in the heat storage tank 30 or the storage battery, the energy efficiency can be further improved by using the power and the heat for growing wood in the agricultural house AH.

When the power demand or the air conditioning demand is not low in the specific facility F and when there is room for storage in the heat storage tank 30 and the storage battery, the power and the heat may also be used to grow wood in the agricultural house AH.

Here, when carbon dioxide necessary to grow wood that is a source of the wood material is generated by combustion of the wood material, a carbon dioxide environment can be considered to be net zero at a time of biomass power generation. For this reason, supplying carbon dioxide generated during biomass power generation to the agricultural house AH also temporarily reduces carbon dioxide.

FIG. 2 is a configuration diagram showing an example of the carbon dioxide supply unit 70 shown in FIG. 1. As shown in FIG. 2, the carbon dioxide supply unit 70 preferably includes an exhaust path 71 that is a supply path of carbon dioxide, a filter 72, a blower 73, a compressor 74, and a tank 75. The exhaust path 71 is a flow path through which exhaust gas of the biomass generator 10 flows. The exhaust path 71 includes a first exhaust path 71a connected from the biomass generator 10 to the tank 75, and a second exhaust path 71b connected from the tank 75 to the agricultural house AH. In the first exhaust path 71a, the filter 72, the blower 73, and the compressor 74 are provided in this order from the biomass generator 10, and a part of the first exhaust path 71a closer to the biomass generator 10 than to the filter 72 constitutes a heat exchanger HE.

The heat exchanger HE is disposed at a lower portion of the heat storage tank 30. That is, the first exhaust path 71a is connected to the tank 75 through the heat storage tank 30. As described above, the heat medium is introduced into the heat storage tank 30. For this reason, the heat exchanger HE heats the heat medium in the heat storage tank 30 using high-temperature exhaust gas generated in the biomass generator 10. Further, the exhaust gas from the biomass generator 10 is cooled by heat exchange by the heat exchanger HE.

The filter 72 removes impurities from the exhaust gas. The filter 72 is preferably, for example, a combination of a dust removal filter for removing soot or the like contained in the exhaust gas and a NOx absorption filter for removing nitrogen oxides. The blower 73 is a blowing unit that smoothly circulates the exhaust gas. The compressor 74 compresses exhaust gas (gas containing a large amount of carbon dioxide) and stores the exhaust gas in the tank 75 in a high-pressure state. The tank 75 stores gas containing a large amount of carbon dioxide in a high-pressure state.

The carbon dioxide supply unit 70 stores the exhaust gas in the tank 75 without discarding the exhaust gas when a carbon dioxide concentration in the agricultural house AH is sufficient, and supplies a necessary amount of carbon dioxide from the tank 75 to the agricultural house AH when the carbon dioxide in the agricultural house AH is not sufficient.

Although the carbon dioxide supply unit 70 cools the exhaust gas by heat exchange in the heat exchanger HE, the carbon dioxide supply unit 70 may separately include a cooling unit such as a heat exchanger or include a flow path for discarding the exhaust gas in preparation for insufficient cooling.

Further, the carbon dioxide supply unit 70 preferably includes a control unit 76, a distribution mechanism 77, a flowmeter 78, and a concentration meter 79 and performs distribution control for supplying an appropriate amount of carbon dioxide to each of the first house AH1 and the second house AH2.

The control unit 76 controls the supply of carbon dioxide to the agricultural house AH in the carbon dioxide supply unit 70, and controls opening and closing of the tank 75 and an opening degree of the distribution mechanism 77 based on signals from the flowmeter 78 and the concentration meter 79.

The distribution mechanism 77 is a valve disposed in the second exhaust path 71b and having an adjustable opening degree. By controlling the distribution mechanism 77, the amount of gas flowing toward each of the first house AH1 and the second house AH2 in the second exhaust path 71b can be adjusted.

The flowmeter 78 measures a gas flow rate. The flowmeter 78 includes a first flowmeter 78a that measures a flow rate of the gas flowing toward the first house AH1 in the second exhaust path 71b, and a second flowmeter 78b that measures a flow rate of the gas flowing toward the second house AH2 in the second exhaust path 71b. Information on the flow rates measured by the first flowmeter 78a and the second flowmeter 78b is transmitted to the control unit 76.

The concentration meter 79 measures the carbon dioxide concentration in the agricultural house AH. The concentration meter 79 includes a first concentration meter 79a that measures the carbon dioxide concentration in the first house AH1 and a second concentration meter 79b that measures the carbon dioxide concentration in the second house AH2. Information on the concentrations measured by the first concentration meter 79a and the second concentration meter 79b is transmitted to the control unit 76.

Here, the control unit 76 controls the carbon dioxide amount supplied from the tank 75 to the agricultural house AH based on one of following two viewpoints.

First, the control unit 76 controls the amount of gas supplied from the tank 75 to each of the houses AH1, AH2 based on a ratio between the carbon dioxide amount necessary in the first house AH1 and the carbon dioxide amount necessary in the second house AH2. Specifically, it is assumed that the carbon dioxide amount necessary in the first house AH1 is CA1, and the carbon dioxide amount necessary in the second house AH2 is CA2. In this case, the control unit 76 adjusts the opening degree of the distribution mechanism 77 such that (CA1/CA1 + CA2) of the gas from the tank 75 flows to the first house AH1. Accordingly, the control unit 76 adjusts the opening degree of the distribution mechanism 77 such that (CA2/CA1 + CA2) of the gas from the tank 75 flows to the second house AH2. Accordingly, the control unit 76 supplies carbon dioxide at a ratio corresponding to the necessary carbon dioxide amounts CA1, CA2.

The control unit 76 receives signals from the first concentration meter 79a and the second concentration meter 79b, and stops the supply of carbon dioxide from the tank 75 when the carbon dioxide concentration detected by one of the concentration meters 79a, 79b reaches a prescribed concentration (for example, 800 ppm).

In terms of the necessary carbon dioxide amounts CA1, CA2, it is preferable to consider degrees of growth of wood and crops and types of wood and crops. This is because the necessary carbon dioxide amounts CA1, CA2 may vary depending on the degrees of growth of wood and crops and the types of wood and crops.

Second, the control unit 76 controls the carbon dioxide concentration in each of the first house AH1 and the second house AH2 based on the ratio between the carbon dioxide amount necessary in the first house AH1 and the carbon dioxide amount necessary in the second house AH2. The necessary carbon dioxide amounts CA1, CA2 are the same as those described above. It is assumed that the carbon dioxide concentration in the air is 400 ppm. In this case, the control unit 76 performs control such that an additional concentration relative to 400 ppm coincides the ratio of the necessary carbon dioxide amounts CA1, CA2 in the houses AH1, AH2.

The control unit 76 preferably supplies the gas from the tank 75 until one of the first house AH1 and the second house AH2 reaches a specified concentration (for example, 800 ppm).

FIG. 1 will be referred to again. As illustrated in FIG. 1, the agricultural house AH preferably includes a flow path R for spatially connecting the first house AH1 and the second house AH2. For example, it is assumed that an appropriate temperature of one of the first house AH1 and the second house AH2 is high and an appropriate temperature of the other is slightly low from a relationship between the wood and the crops to be grown. In this case, the circulation system 1 controls the one house to an appropriate temperature environment, and utilizes leakage of heat through the flow path R for a temperature environment of the other. This is because, by controlling the temperature of only one of the first house AH1 and the second house AH2, the temperature environment of the other can also be adjusted. Similarly, the circulation system 1 may supply carbon dioxide to one of the first house AH1 and the second house AH2 and utilize an outflow of carbon dioxide through the flow path R without supplying carbon dioxide to the other due to such a reason that plants of the one house are in a growth stage and plants of the other house are not. This is because, by controlling the carbon dioxide concentration of only one of the first house AH1 and the second house AH2, an environment of the carbon dioxide concentration of the other can also be adjusted. In particular, it is preferable to perform more appropriate carbon dioxide supply control by combining the supply control of carbon dioxide by the control unit 76 (see FIG. 2) and opening and closing control of the flow path R.

It is preferable that the flow path R can be freely opened and closed since temperature leakage and outflow of carbon dioxide are not always desired.

In the present embodiment, it is assumed that power generation output of the biomass generator 10 is X kW, power generation efficiency is Y, total operation time scheduled for a year is Z hours, and the heat generation amount of the wood material is C kW/kg. In this case, it is preferable that the agricultural house AH grow seedlings of the number of trees equivalent to a mass of X · Z/C · Y yielded at the time of harvest and logging.

This is because, when the seedlings grown in the agricultural house AH grow and are harvested and logged, it is theoretically possible to cover the fuel used for a year and make the system close to a complete circulation system.

Details are as follows. First, when the power generation output of the biomass generator 10 is X (kW) and the power generation efficiency is Y, the input amount necessary for power generation per hour is X/Y (kW). Here, when the heat generation amount of the wood material is C (kW/kg), the wood material necessary for power generation per hour is X/C · Y (kg). Therefore, when the total operation time scheduled in a year is Z hours, the wood material necessary for power generation in a year is X · Z/C · Y (kg). The total operation time scheduled in a year is, for example, 24 × 365 = 8760 hours in a case of the biomass generator 10 that performs base load operation, and is operation time by timer × 365 hours in a case of the biomass generator 10 including a timer schedule.

The agricultural house AH grows the number of seedlings that yield X · Z/C · Y (kg) at the time of harvest and logging. For example, in a case of wood pellets of cedar, the heat generation amount C is 4.65 kW/kg, and accordingly the wood pellets of cedar necessary for power generation for one year are X · Z/4.65 · Y (kg). Here, assuming that an average volume of a single cedar is 0.57m³ and an average specific gravity is 0.6, an average weight AW per cedar is 342 kg. When an average ratio (average weight ratio of a single cedar converted into wood pellets) AC of scrap materials is less than 30%, weight of wood pellets obtained from a single cedar is substantially 100 kg. Then, the number of cedars necessary for power generation for one year is X · Z/AW · AC · 4.65 · Y = X · Z/465Y.

Therefore, when the biomass generator 10 uses wood pellets of cedar as the wood material, it can be said that the agricultural house AH preferably grows the number of seedlings exceeding X · Z/465 · Y

Here, it is assumed that there are two biomass generators 10 that use wood pellets of cedar (power generation output: 165 kW), one of which is of base load operation for 24 hours and 365 days, and the other one of which is of operation for 16 hours and 365 days from 7: 00 to 23: 00 in accordance with operating time of the specific facility F. In this case, the power generation output X is 165 kW, and the total operation time Z is 14600 hours. The power generation efficiency Y is assumed to be 0.3. In this case, a value of the calculation formula of X · Z/465 · Y is substantially 17268.81. Therefore, the agricultural house AH in this case grows 17269 or more cedar seedlings.

In a case of planting such a number of grown seedlings, the number of cedar planted per ha is 2500. Therefore, a necessary area is 6.7 ha. A forest area in Japan is substantially 250,000 ha, and an area of a mountain owned by an individual is usually substantially 400 ha, and 6.7 ha is sufficiently realistic. For this reason, the circulation system 1 of complete circulation type can also be implemented.

Further, even when the wood material is not wood pellets of cedar, the number of seedlings that yield X · Z/C · Y (kg) can be calculated. For example, in a case of pine and cypress, an average value of weight at the time of harvest and logging is also clear. In addition, a known value may be adopted as the heat generation amount when the wood is converted into wood pellets and wood chips. Similar to cedar described above, it is also possible to calculate a ratio of scrap materials. When the total amount of wood is used as firewood, it is not necessary to calculate the ratio of scrap materials.

Next, operation of the circulation system 1 according to the present embodiment will be described. First, the biomass generator 10 burns the wood material as fuel. Accordingly, the biomass generator 10 generates power and obtains waste heat and carbon dioxide.

The generated power is supplied to the specific facility F and the first air conditioner 40 by the first power supply unit 20. The first power supply unit 20 preferably includes a storage battery and supplies power to the specific facility F and the first air conditioner 40 via the storage battery.

Further, the generated power is supplied to the agricultural house AH, the second air conditioner 60, and the carbon dioxide supply unit 70 by the second power supply unit 50. The second power supply unit 50 preferably includes a storage battery and supplies power to the agricultural house AH, the second air conditioner 60, and the carbon dioxide supply unit 70 via the storage battery.

As shown in FIG. 2, exhaust gas generated by combustion of the wood material in the biomass generator 10 is supplied to the heat exchanger HE in the heat storage tank 30 through the exhaust path 71, and is used to heat the heat medium in the heat storage tank 30. Accordingly, heat is stored in the heat storage tank 30.

The exhaust gas that has passed through the heat exchanger HE has impurities removed through the filter 72, and is compressed and stored in the tank 75 by the compressor 74. Then, carbon dioxide is supplied from the tank 75 into the agricultural house AH as necessary. The supply of carbon dioxide is controlled by a control unit that receives a signal from a carbon dioxide concentration sensor provided in the agricultural house AH. The supply of carbon dioxide may be manually performed by an operator with reference to a carbon dioxide concentration meter.

The first air conditioner 40 and the second air conditioner 60 perform air conditioning of the specific facility F and the agricultural house AH using thermal energy stored in the heat storage tank 30. The agricultural house AH preferably includes equipment for pumping underground water, which is used for growing wood and cultivating crops. It is preferable that the agricultural house AH grow seedlings of the number of trees equivalent to a mass of X · Z/C · Y (kg) yielded at the time of harvest and logging.

In particular, in the present embodiment, the first house AH1 grows wood. For this reason, the circulation system 1 provides electricity and an appropriate air conditioning environment to the specific facility F and grows wood for obtaining the wood material as fuel of the circulation system 1, so that energy efficiency can be improved.

In this manner, the circulation system 1 according to the present embodiment supplies the generated power of the biomass generator 10 to the specific facility F using the wood material as fuel, and performs air conditioning of the specific facility F based on the waste heat. The generated power by the biomass generator 10, the air conditioning environment due to waste heat, and the generated carbon dioxide are also supplied to the agricultural house AH. In the agricultural house AH, wood for obtaining the wood material as fuel is grown. That is, the circulation system 1 is of a type in which fuel of the biomass generator 10 for generating electricity for the specific facility F and obtaining an air conditioning environment is produced by itself. For this reason, it is possible to supply electricity or the like to the specific facility F, produce fuel by itself, and improve energy efficiency.

The agricultural house AH includes the first house AH1 that cultivates wood for obtaining the wood material available as fuel in the biomass generator 10 and the second house AH2 that cultivates crops. For this reason, not only wood but also crops can be cultivated, and crops and wood having different optimum growth environments can be grown in different environments.

It is assumed that the power generation output of the biomass generator 10 is X (kW), the power generation efficiency is Y, the total operation time scheduled for a year is Z hours, and the heat generation amount of the wood materials is C (kW/kg). In this case, the agricultural house AH grows seedlings of the number of trees equivalent to a mass of X · Z/C · Y (kg) yielded at the time of harvest and logging. Accordingly, it is theoretically possible to cover the fuel used for a year when the seedlings cultivated in the agricultural house AH grow and are harvested and logged. Therefore, the circulation system 1 close to a complete circulation type can be implemented.

The carbon dioxide supply unit 70 has a structure in which gas from which impurities are removed by the filter 72 is compressed and stored in the tank 75, and in which the high-temperature exhaust gas from the biomass generator 10 is cooled in the heat storage tank 30 and stored in the tank 75. Accordingly, after the thermal energy is extracted from the exhaust gas, the carbon dioxide can be compressed and stored in the tank 75 and supplied to the agricultural house AH by a necessary amount. Therefore, it is possible to efficiently store heat and carbon dioxide and use only a necessary amount of carbon dioxide.

Although the present disclosure has been described above based on the embodiment, the present disclosure is not limited to the above embodiment, modifications may be made without departing from the spirit of the present disclosure, publicly known and well-known techniques may be combined as appropriate, and embodiments may be combined.

For example, in the above embodiment, the agricultural house AH grows wood in the first house AH1 and cultivates crops in the second house AH2. However, the present disclosure is not limited thereto, and the agricultural house AH may grow only wood. The agricultural house AH may also grow a plurality of types of wood.

## Claims

1. A circulation system (1) comprising:
a biomass generator (10) configured to perform biomass power generation by rotating a turbine using a wood material as fuel and supply electricity to a specific facility;
a first air conditioner (40) configured to perform air conditioning of the specific facility based on waste heat generated by use of the fuel in the biomass generator (10);
a second air conditioner (60) configured to perform air conditioning of an agricultural house (AH) that cultivates plants based on the waste heat generated by use of the fuel in the biomass generator (10);
a first supply structure (50) configured to supply generated power by the biomass generator (10) to at least one of equipment in the agricultural house and the second air conditioner (60); and
a second supply structure (70) configured to supply carbon dioxide generated by use of the fuel in the biomass generator (10) to the agricultural house (AH), wherein
the agricultural house (AH) grows wood for obtaining the wood material available as the fuel in the biomass generator (10).

2. The circulation system (1) according to claim 1, wherein
the agricultural house (AH) includes a first house (AH1) that grows wood for obtaining the wood material available as the fuel in the biomass generator (10), and a second house (AH2) that cultivates crops.

3. The circulation system (1) according to claim 1, wherein
in a case that power generation output of the biomass generator (10) is X kW, power generation efficiency is Y, a heat generation amount of the fuel is C kW/kg, and total operation time scheduled in a year is Z hours, the agricultural house (AH) grows seedlings of a number of trees equivalent to weight of X · Z/C · Y yielded at a time of harvest and logging.

4. The circulation system (1) according to claim 1, further comprising:
a heat storage tank (30) configured to store the waste heat generated by use of the fuel in the biomass generator (10), wherein
the second supply structure (70) includes a filter (72) that removes impurities from exhaust gas from the biomass generator (10) after being cooled by heat storage in the heat storage tank (30), and a tank (75) that stores gas having impurities removed by the filter (72) and having been compressed, and supplies carbon dioxide generated by use of the fuel to the agricultural house by supplying the gas in the tank (75) to the agricultural house (AH).
